# EUROPÄISCHE PATENTANMELDUNG

(11) **EP 4 691 684 A2**
(43) Veröffentlichungstag der Anmeldung: **11.02.2026**
(21) Anmeldenummer: 25186764.4
(22) Anmeldetag: 01.07.2025
(51) Int. Cl.: B23P 11/02, H05B 6/14, B23Q 17/00, B23B 31/117

(54) **INDUKTIONSSCHRUMPFGERÄT MIT PLAUSIBILITÄTSKONTROLLE**

(30) Priorität: 02.08.2024 DE 102024122207
(71) Anmelder: Haimer GmbH, 86568 Hollenbach-Igenhausen (DE)
(72) Erfinder: Haimer, Andreas, 86568 Hollenbach-Igenhausen (DE)

(57) **Zusammenfassung**

Induktionsschrumpfgerät zum Ein- und/oder Ausschrumpfen von Werkzeugen in und aus Werkzeugspannfuttern in Gestalt von Schrumpffuttern, mit einer Induktionsspule, die über den Haltebereich des Werkzeughalters geschoben wird, der den Schaft des ein- oder auszuspannenden Werkzeugs aufnimmt und hält, und (zumindest) in dem Haltebereich im Rahmen eines Erwärmungszyklus Wirbelströme induziert, die ihn soweit und so schnell erwärmen, dass sich ein Werkzeugschaft in den Haltebereich einbauen oder aus ihm ausbauen lässt, wobei das Induktionsschrumpfgerät eine Sicherheitsvorrichtung aufweist, die erkennt, insbesondere verhindert, dass ein und derselbe Werkzeughalter mehreren unmittelbar aufeinanderfolgenden Erwärmungszyklen unterworfen wird.

## Beschreibung

Die vorliegende Erfindung betrifft eine Einrichtung und ein Verfahren zum Ein- und/oder Ausschrumpfen von Werkzeugen in und aus Werkzeugspannfuttern nach dem Oberbegriff des jeweiligen Hauptanspruchs.

### TECHNISCHER HINTERGRUND

Werkzeugspannfutter, in die nicht zuletzt Fräswerkzeuge, Schleif- oder Reibwerkzeuge eingespannt werden, sind vielfältig bekannt. Die hier relevanten Werkzeugspannfutter sind als Schrumpffutter ausgebildet. Sie besitzen eine Hülsenpartie, in die der Schaft des jeweiligen Werkzeugs eingeschrumpft wird. Hierdurch entsteht ein fester Presssitz, der den Werkzeugschaft verdrehfest und mit hoher Rundlaufgenauigkeit hält.

Um ein Werkzeug mit seinem Schaft einschrumpfen zu können, wird die Hülsenpartie des mit dem Werkzeug auszustattenden Schrumpffutters induktiv aufgeheizt. Dadurch dehnt sich die Hülsenpartie auf. Ihr lichter Innendurchmesser wird größer als der Außendurchmesser des einzuschrumpfenden Schafts. Der Schaft lässt sich leicht einschieben. Durch das Wiederabkühlen der Hülsenpartie entsteht dann der besagte Presssitz.

Um ein Werkzeug wieder ausschrumpfen zu können, wird die Hülsenpartie des es bisher im Presssitz haltenden Schrumpffutters erneut induktiv aufgeheizt, mit hoher Leistung und entsprechender Geschwindigkeit. Das Aufheizen wird gestoppt, bevor die Hülsenpartie eine nennenswerte Menge der in ihr induktiv erzeugten Wärme nach innen auf den Werkzeugschaft ableiten konnte. Dadurch entsteht ein naturgemäß nicht allzu langes Zeitfenster, währenddessen die Hülsenpartie sich weit genug aufgedehnt hat, um den noch nahezu kalten Werkzeugschaft problemlos aus ihr herausziehen zu können.

Typischerweise wird das induktive Aufheizen zeitgesteuert durchgeführt.

Entweder verfügt das Schrumpfgerät über eine automatische Erkennung des Schrumpffuttertyps und der Schrumpffuttergröße und wählt dann die passenden Parameter für den das Ein- oder Ausschrumpfen ermöglichenden Heizzyklus. Alternativ gibt der Benutzer Typ und Größe des Schrumpffutters ein und das Schrumpfgerät stellt dann selbst den dazu passenden Heizzyklus ein. In heute nur noch seltenen Fällen stellt der Benutzer die Parameter des Heizzyklus in Abhängigkeit vom jeweiligen Schrumpffutter händisch ein.

Dabei kann es dazu kommen, dass sich am Ende eines Heizzyklus herausstellt, dass sich der Werkzeugschaft wider Erwarten nicht aus der Hülsenpartie des Schrumpffutters herausziehen lässt.

Gerade ein weniger erfahrener Benutzer reagiert darauf nicht selten unbesonnen. Er nimmt spontan an, der Heizzyklus habe wohl nicht ausgereicht und neigt dann dazu, einen weiteren Heizzyklus auszulösen. Das führt dann aber meist dazu, dass die Hülsenpartie des Schrumpffutters signifikant zu hoch aufgeheizt wird. Hierdurch entstehen Gefügeänderungen in der Hülsenpartie, die das betroffene Schrumpffutter nicht selten unbrauchbar machen.

Die entsprechende Problematik tritt auch bei ungewollten Doppelerhitzungen von Schrumpffuttern auf, beispielsweise, wenn der Benutzer vergisst, ein bearbeitetes Schrumpffutter einem Induktionsschrumpfgerät zu entnehmen.

### AUFGABE DER ERFINDUNG

Vor diesem Hintergrund ist es die Aufgabe der Erfindung, ein Induktionsschrumpfgerät bereitzustellen, das einen höheren Schutz gegen Fehlbedienung bietet.

### ERFINDUNGSGEMÄSSE LÖSUNG

Die Grundlage der Erfindung ist die Erkenntnis, dass man davon ausgehen kann, dass immer dann, wenn die Induktionsspule zwischen zwei Heizzyklen nicht bewegt wird, das gleiche Schrumpffutter ein weiteres Mal einem Heizzyklus unterworfen werden soll, also eine Fehlbedienung zu erwarten ist. Entsprechendes gilt auch für so geringfügige Bewegungen der Induktionsspule, welche höchstens so gering sind, dass die über das Schrumpffutter geschobene Induktionsspule das Schrumpffutter nicht freigibt.

Die erfindungsgemäße Lösung ist ein als solches bekanntes Induktionsschrumpfgerät zum Ein- und/oder Ausschrumpfen von Werkzeugen in und aus Werkzeugspannfuttern in Gestalt von Schrumpffuttern.

Es besitzt eine Induktionsspule, die über die Hülsenpartie des Schrumpffutters geschoben wird, die den Schaft des ein- oder auszuspannenden Werkzeugs aufnimmt und hält, und (zumindest) in der Hülsenpartie im Rahmen eines Heizzyklus Wirbelströme induziert, die sie soweit und so schnell erwärmen, dass sich ein Werkzeugschaft aus der Hülsenpartie einbauen oder aus ihr ausbauen lässt.

Erfindungsgemäß zeichnet sich das Induktionsschrumpfgerät dadurch aus, dass es eine Sicherheitsvorrichtung aufweist, die erkennt, insbesondere verhindert, dass ein und dasselbe Schrumpffutter mehreren unmittelbar aufeinanderfolgenden Heizzyklen unterworfen wird.

Das erfindungsgemäße Induktionsschrumpfgerät ist also so eingerichtet, dass es vor dem Beginn eines Heizzyklus oder am Anfang eines Heizzyklus, noch bevor eine schädliche Überhitzung der Hülsenpartie zu befürchten ist, eine Plausibilitätsprüfung durchführen kann, ob die Vorgeschichte dazu passt, dass nun ein Heizzyklus gestartet oder weitergeführt wird. Das ist nicht der Fall, wenn kein neues Schrumpffutter eingesetzt worden ist. Da zum Einsetzen und Schrumpfbereitmachen eines neuen, aktuell noch nicht beheizten Schrumpffutters stets die Induktionsspule bewegt werden muss, bietet es sich primär an, sie bzw. deren Bewegung (oder Bewegungsbereitstellung) zum Zwecke der Erfindung zum Maß der Dinge zu machen, und insbesondere immer dann das Starten oder die Weiterführung eine neuen Heizzyklus zu verhindern, wenn sie unmittelbar zuvor nicht angerührt bzw. bewegt/bewegungsbereitgestellt worden ist.

### BEVORZUGTE AUSGESTALTUNGSMÖGLICHKEITEN

### Vorzugweise besitzt das erfindungsgemäße

Induktionsschrumpfgerät eine Sicherheitsvorrichtung, die mindestens eine Steuerelektronik aufweist und mindestens einen Sensor. Letzterer erlaubt es der Steuerelektronik, festzustellen, ob der nächste vom Bediener in Auftrag gegebene Erwärmungszyklus an dem gleichen Werkzeughalter durchgeführt werden soll, der auch dem vorherigen Erwärmungszyklus unterworfen wurde. Dabei ist das Steuergerät insbesondere so ausgebildet, dass es im Bejahensfall die Durchführung des neuerlich in Auftrag gegebenen Erwärmungszyklus verweigert, also gar nicht erst startet oder abbricht.

Eine besonders einfache und zuverlässige Lösung sieht vor, dass die Induktionsspule in ihrer jeweiligen Arbeitsposition an einer Linearführung mit Hilfe eines Klemmorgans festgesetzt wird. Dabei ist der mindestens eine Sensor ein Klemmorgandetektor, der der Steuerelektronik signalisiert, ob das Klemmorgan angezogen oder gelöst ist. Der Klemmorgandetektor ist vorzugsweise ein mechanischer Schalter, etwa ein Mikrotaster, der von dem Klemmorgan oder seiner Betätigungseinrichtung betätigt wird. Alternativ kann auch ein Näherungssensor zum Einsatz kommen, der eine bestimmte Stellung des Näherungssensors oder seiner Betätigungseinrichtung sensiert. Auf diesem Wege wird zwar nicht die Bewegung der Induktionsspule gemessen, sondern nur die Tatsache, ob die Induktionsspule bewegungsbereit gemacht worden ist. Das tut der Sache zunächst aber keinen ganz entscheidenden Abbruch.

### Entsprechendes gilt für einen Sensor, welcher

"schon" Berührungen und/oder Handgriffe eines Benutzers detektiert ("release by touch") und welcher beispielsweise in einem Handgriff eines die Spule tragenden, insbesondere verschiebbaren (vgl. Linearführung), Trägers angeordnet ist.

Auch hier wird schon der die Bewegung "vorbereitende" Versuch erkannt.

Für andere Anwendungsfälle ist es besonders vorteilhaft, wenn der mindestens eine Sensor ein Sensor ist, der wirklich die Bewegung, insbesondere eine vertikale oder horizontale Bewegung, der Spule überwacht.

Idealerweise ist der besagte, soeben namhaft gemachte Sensor als ein Abstandssensor ausgebildet, der den Abstand zwischen der Spule und einem zumindest zeitweiligen Fixpunkt am Induktionsschrumpfgerät misst bzw. einen relativen Abstand zwischen der Spule und dem Werkzeugspannfutter.

Dabei ist der Fixpunkt idealerweise die Grundplatte des Induktionsschrumpfgeräts oder eine geeignete Fläche am Halter, der das Werkzeugspannfutter zum Ein- oder Ausschrumpfen aufnimmt und in Position hält.

In anderen Anwendungsfällen ist der besagte mindestens eine Sensor als ein Wegaufnehmer ausgebildet, der anhand von Markierungen an der Führungsschiene erkennt, ob die Spule entlang der Führungsschiene verfahren wird. Je nach Art des Induktionsschrumpfgerätes kann die Führungsschiene im Wesentlichen vertikal oder horizontal ausgerichtet sein.

Die Markierungen auf der Führungsschiene können vergleichsweise grob sein und etwa aus vom Sensor sensierbaren Marken bestehen, die z. B. jeweils etwa 1 cm voneinander entfernt sind. Andere Skalierungen sind durchaus denkbar. In wieder anderen Fällen ist ein fertiger Maßstab an der Führungsschiene angebracht, der cm-genau oder sogar mm-genau vom Sensor abgetastet werden kann.

Für wieder andere Einsatzfälle kann es zu bevorzugen sein, dass die Spule mit einem Gewichtsausgleich verbunden ist, der ihr Auf- und Abfahren erleichtert. Der mindestens eine Sensor ist dann ein Sensor, der eine Bewegung des Gewichtsausgleichs erkennt, also des Ausgleichsgewichts oder des Zugmittels, das dieses und die Spule verbindet. Auch auf diese Art und Weise kann absolut zuverlässig und einfach festgestellt werden, ob die Induktionsspule bewegt worden ist.

Bei anspruchsvolleren Anwendungen ist vorgesehen, dass der mindestens eine Sensor ein der Spule zugeordneter, bevorzugt in ihr Gehäuse eingebauter Winkel-, Neigungs- und/oder Beschleunigungssensor ist.

In wieder anderen Fällen kann auch so vorgegangen werden, dass der Sensor eine Licht- oder Ultraschallschranke ist, die durch die Anwesenheit eines Werkzeugspannfutters in seinem Halter betätigt wird, wobei die Licht- oder Ultraschallschranke bevorzugt in den Halter eingelassen ist. Es kommt dann nicht auf die Bewegung der Spule an, sondern darauf, ob ein frisches Schrumpffutter in den hierfür vorgesehenen Halter eingesetzt worden ist, wozu natürlich die Induktionsspule bewegt worden sein muss.

### FIGURENLISTE

Die Figur 1 zeigt die Lösungsvariante mit dem Sensor 11, der die Betätigung der Klemmtaste 10 überwacht.
Die Figur 2 zeigt die Lösungsvariante mit der Abstandsmessung zwischen Spule 6 und Grundplatte 5.
Die Figur 3 zeigt die Lösungsvariante mit der Erkennung einer Spulenbewegung anhand der Positionsmarken an der Linearführung 9.
Die Figur 4 vermittelt ein Bild für die Messung der Spulenbewegung anhand des Gewichtsausgleichs 15.

### BEVORZUGTE AUSFÜHRUNGSBEISPIELE

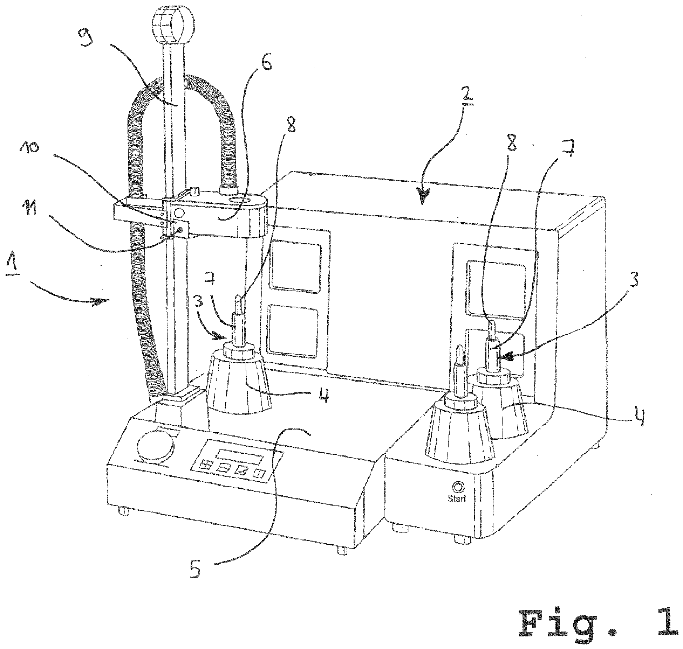

Die Fig 1 zeigt ein erstes Ausführungsbeispiel der Erfindung.

Es handelt sich hier um ein Induktionsschrumpfgerät 1 mit einer für die Erfindung nicht interessierenden Kühlstrecke 2 für soeben einem Ein- oder Ausschrumpfen unterzogenen Schrumpffutter 3. Jedes Schrumpffutter wird von einem Halter 4 in seiner mit dem Induktionsschrumpfgerät bearbeitbaren Position gehalten. Das gut zu sehende Display dient hier als Kommunikationsmittel mit der unterhalb der Grundplatte eingebauten Steuerelektronik.

Von Interesse für die Erfindung ist der vordere linke Teil der Fig. 1.

Dort steht ein Schrumpffutter 3 in seinem Halter 4 auf der Grundplatte 5 des Induktionsschrumpfgeräts. Es wartet darauf, dass die Induktionsspule 6 abgesenkt und über die Hülsenpartie 7 gefahren wird, um das verschlissene Werkzeug 8 auszuschrumpfen und ein hier nicht gezeigtes neues Werkzeug einschrumpfen zu können.

Die Induktionsspule ist zu diesem Zweck an der Linearführung 9 vertikal verschiebbar geführt. Um die Induktionsspule an der Linearführung herunterfahren zu können, muss das in der Fig. 1 nicht erkennbare Klemmorgan durch Druck auf die zugehörige Klemmtaste 10 gelöst werden. Gleiches gilt für das Wiederhochfahren der Induktionsspule. Dem Klemmorgan, genauer gesagt hier seiner Klemmtaste 10, ist ein als Klemmorgandetektor fungierender Sensor 11 zugeordnet. Der Sensor 11 sendet ein Signal an die Steuerungselektronik, sobald die Klemmtaste betätigt worden ist, um die Induktionsspule längs der Linearführung verfahren zu können.

Registriert die Steuerungselektronik, dass ein weiterer Heizzyklus angefordert oder ausgelöst worden ist, ohne dass zwischendurch der Sensor 11 signalisiert hat, dass die Klemmtaste betätigt wurde, ist klar, dass der Bediener im Begriff ist, die Hülsenpartie 7 zu überhitzen, weil er an ein und demselben Schrumpffutter einen zweiten Heizzyklus ausführen lassen will. Die Steuerungselektronik verweigert dann den Start des zweiten Heizzyklus oder bricht ihn, wenn er schon gestartet worden ist, ab.

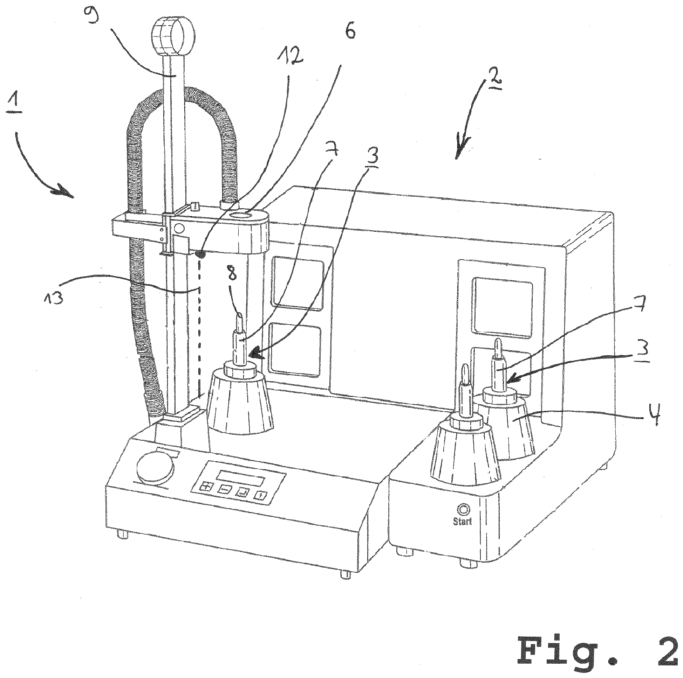

Die Fig 2 zeigt ein zweites Ausführungsbeispiel der Erfindung.

Diese obigen Ausführungen zum ersten Ausführungsbeispiel gelten hier entsprechend, naturgemäß mit Ausnahme der Ausführungen zum Sensor 11 des ersten Ausführungsbeispiels.

### Statt des Sensors 11 zeichnet sich das zweite

Ausführungsbeispiel dadurch aus, dass der Sensor 12 als Abstandssensor ausgebildet ist, der hier an die Spule an- oder in sie eingebaut ist. In manchen Fällen wird es sich bei dem Sensor 12 um einen Lasersensor handeln, der mit einem Laserstrahl 13 den aktuellen Abstand zwischen der Spule und einem zumindest zeitweiligen Fixpunkt am Induktionsschrumpfgerät misst - ähnlich wie ein zunehmend den Meterstab ersetzender, baumarktüblicher Laserentfernungsmesser. Dabei ist der Fixpunkt idealerweise die Grundplatte 5 des Induktionsschrumpfgeräts, ersatzweise beispielsweise die obere Kreisringstirnfläche des Halters 4 oder ein anderer, mit der Grundplatte 5 verbundener Fixpunkt.

Wenn sich der Abstand zwischen der Spule 6 und der Grundplatte 5 zwischen einem vorherigen und dem jetzt angeforderten oder begonnenen Heizzyklus nicht oder zumindest nicht wesentlich geändert hat, dann kann die Steuerelektronik die gleichen Schlüsse ziehen und Maßnahmen einleiten, wie zum ersten Ausführungsbeispiel erläutert.

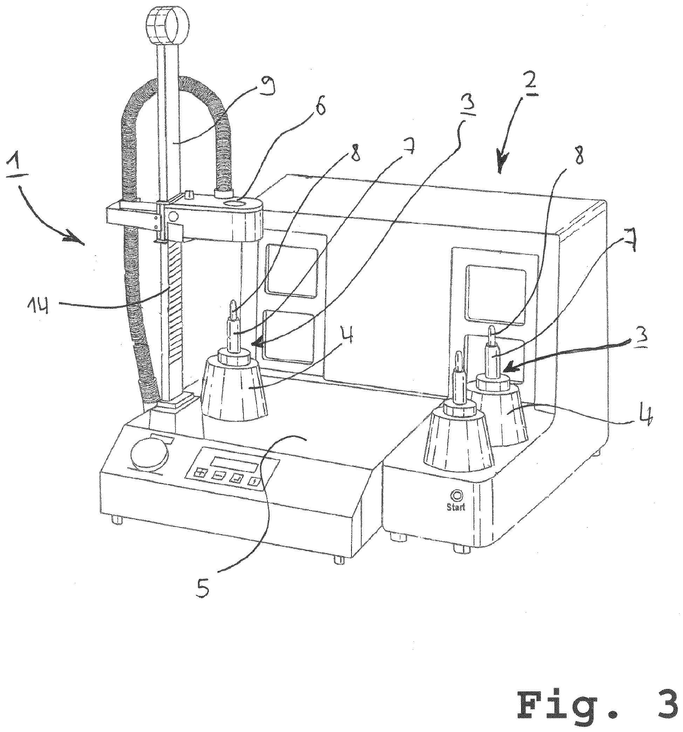

Die Fig 3 zeigt ein drittes Ausführungsbeispiel der Erfindung.

Die obigen Ausführungen zum ersten Ausführungsbeispiel gelten hier entsprechend, naturgemäß mit Ausnahme der Ausführungen zum Sensor 11 des ersten Ausführungsbeispiels.

Bei diesem Ausführungsbeispiel ist nun die Linearführung 9 mit Positionsmarken 14 versehen, die von einem hier nicht figürlich gezeigten Sensor, der hier in die Induktionsspule bzw. ihr Gehäuse eingelassen ist, gezählt bzw. detektiert werden können. Die Positionsmarken können grobe sichtbare oder nicht sichtbare Marken sein, die alle paar Zentimeter vorgesehen sind, oder es kann sich um ein cm-genaues oder gar mm-genaues Maßband handeln bzw. um entsprechende Magnetpolmarken.

Auch auf diese Art und Weise kann sich die Steuerelektronik ein Bild davon verschaffen, ob sich die Spule zwischen dem letzten durchgeführten Heizzyklus und dem jetzt angeforderten oder begonnenen Heizzyklus so bewegt hat, dass ein neuerlicher Heizzyklus plausibel erscheint.

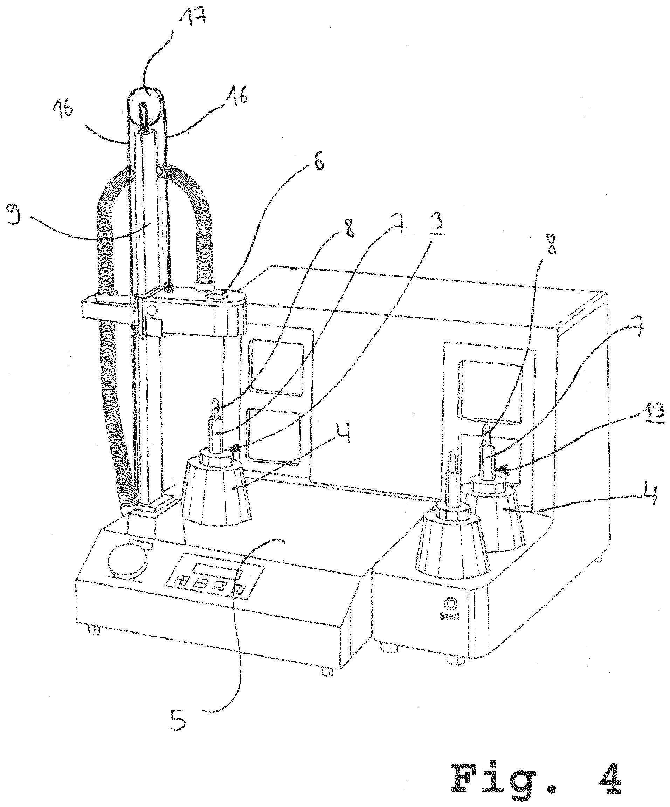

Die Fig 4 zeigt ein viertes Ausführungsbeispiel der Erfindung.

Die obigen Ausführungen zum ersten Ausführungsbeispiel gelten hier entsprechend, naturgemäß mit Ausnahme der Ausführungen zum Sensor 11 des ersten Ausführungsbeispiels.

Hier zeichnet sich die Lösung dadurch aus, dass die Spule 6 mit einen Gewichtsausgleich 15 verbunden ist, der ihr Auf- und Abfahren erleichtert, und der mindestens eine, hier nicht figürlich dargestellte Sensor ein Sensor ist, der eine Bewegung des Gewichtsausgleichs erkennt, also des Ausgleichsgewichts und/oder des Zugmittels 16 oder der Umlenkrolle 17, über die das Zugmittel läuft und die das Ausgleichsgewicht und die Spule verbindet.

Auch auf diesem Wege kann die Steuerelektronik die nötige Plausibilitätsprüfung vornehmen.

Ein fünftes und ein sechstes Ausführungsbeispiel sind nicht gesondert figürlich dargestellt, sondern ergeben sich aus den Ansprüchen und dem zugehörigen allgemeinen Teil der Beschreibung.

### BEZUGSZEICHENLISTE

- 1: Induktionsschrumpfgerät
- 2: Kühlstrecke
- 3: Schrumpffutter bzw. Werkzeugspannfutter
- 4: Halter, auch als Werkzeughalter bezeichnet
- 5: Grundplatte
- 6: Induktionsspule
- 7: Hülsenpartie
- 8: Werkzeug
- 9: Linearführung
- 10: Klemmtaste
- 11: Sensor
- 12: Sensor
- 13: Laserstrahl
- 14: Positionsmarken
- 15: Gewichtsausgleich
- 16: Zugmittel
- 17: Umlenkrolle

## Patentansprüche

1. Induktionsschrumpfgerät (1) zum Ein- und/oder Ausschrumpfen von Werkzeugen (8) in und aus Werkzeugspannfuttern (3) in Gestalt von Schrumpffuttern (3),
mit einer Induktionsspule (6), die über den Haltebereich des Werkzeughalters (4) geschoben wird, der den Schaft des ein- oder auszuspannenden Werkzeugs (8) aufnimmt und hält,
und (zumindest) in dem Haltebereich im Rahmen eines Erwärmungszyklus Wirbelströme induziert, die ihn soweit und so schnell erwärmen, dass sich ein Werkzeugschaft in den Haltebereich einbauen oder aus ihm ausbauen lässt,
**dadurch gekennzeichnet, dass**
das Induktionsschrumpfgerät (1) eine Sicherheitsvorrichtung aufweist, die erkennt, dass ein und derselbe Werkzeughalter (4) mehreren unmittelbar aufeinanderfolgenden Erwärmungszyklen unterworfen wird, insbesondere verhindert, dass ein und derselbe Werkzeughalter (4) mehreren unmittelbar aufeinanderfolgenden Erwärmungszyklen unterworfen wird.

2. Induktionsschrumpfgerät (1) nach Anspruch 1, **dadurch gekennzeichnet, dass** die Sicherheitsvorrichtung mindestens eine Steuerelektronik aufweist und mindestens einen Sensor (11; 12), der es der Steuerelektronik erlaubt, festzustellen, ob der nächste vom Bediener in Auftrag gegebene Erwärmungszyklus an dem gleichen Werkzeughalter (4) durchgeführt werden soll, der auch dem vorherigen Erwärmungszyklus unterworfen wurde, und insbesondere das Steuergerät so ausgebildet ist, dass es im Bejahensfall die Durchführung des neuerlich in Auftrag gegebenen Erwärmungszyklus verweigert oder abbricht.

3. Induktionsschrumpfgerät (1) nach einem der vorhergehenden Ansprüche, **dadurch gekennzeichnet, dass** an dem Gerät ein Handgriff vorgesehen ist um die Induktionsspule hin und her zu bewegen, **dadurch gekennzeichnet, dass** der mindestens ein Sensor ein Sensor ist der dem Handgriff zugeordnet ist, der der der Steuerelektronik signalisiert, wenn der Handgriff berührt wird, wobei der Sensor vorzugsweise ein kapazitiver Sensor ist.

4. Induktionsschrumpfgerät (1) nach einem der vorhergehenden Ansprüche, **dadurch gekennzeichnet, dass** die Induktionsspule (6) in ihrer jeweiligen Arbeitsposition an einer Linearführung (9) mithilfe eines Klemmorgans festgesetzt wird, und dass der mindestens eine Sensor (11) ein Klemmorgandetektor ist, der der Steuerelektronik signalisiert, ob das Klemmorgan angezogen oder gelöst ist, wobei der Klemmorgandetektor vorzugsweise ein mechanischer Schalter oder ein Näherungssensor ist.

5. Induktionsschrumpfgerät (1) nach einem der vorhergehenden Ansprüche, **dadurch gekennzeichnet, dass** der mindestens eine Sensor (12) ein Sensor ist, der die Bewegung der Spule (6), insbesondere eine vertikale oder horizontale Bewegung der Spule (6), überwacht.

6. Induktionsschrumpfgerät (1) nach Anspruch 5, **dadurch gekennzeichnet, dass** der besagte Sensor (12) als ein Abstandssensor ausgebildet ist (an Spule (6) verbaut oder an Grundplatte (5)), der den Abstand zwischen der Spule (6) und einem zumindest zeitweiligen Fixpunkt am Induktionsschrumpfgerät (1) misst, wobei der Fixpunkt idealerweise die Grundplatte (5) des Induktionsschrumpfgeräts (1) ist oder ein anderer, mit der Grundplatte (5) verbundener Fixpunkt oder eine geeignete Fläche am Halter (4), der das Werkzeugspannfutter (3) zum Ein- oder Ausschrumpfen aufnimmt und in Position hält.

7. Induktionsschrumpfgerät (1) nach Anspruch 5, **dadurch gekennzeichnet, dass** der besagte mindestens eine Sensor als ein Wegaufnehmer ausgebildet ist, der anhand von Markierungen an der Führungsschiene erkennt, ob die Spule (6) entlang der Führungsschiene verfahren wird.

8. Induktionsschrumpfgerät (1) nach Anspruch 5, **dadurch gekennzeichnet, dass** die Spule (6) mit einem Gewichtsausgleich (15) verbunden ist, der ihr Auf- und Abfahren erleichtert, und der mindestens eine Sensor ein Sensor ist, der eine Bewegung des Gewichtsausgleichs (15) erkennt, bevorzugt des Ausgleichsgewichts oder des Zugmittels (16), das dieses und die Spule (6) verbindet.

9. Induktionsschrumpfgerät (1) nach Anspruch 5, **dadurch gekennzeichnet, dass** der mindestens eine Sensor ein der Spule (6) zugeordneter, bevorzugt in ihr Gehäuse eingebauter Winkel-, Neigungs- und/oder Beschleunigungssensor ist.

10. Induktionsschrumpfgerät (1) nach einem der vorhergehenden Ansprüche, **dadurch gekennzeichnet, dass** der Sensor eine Licht- oder Ultraschallschranke ist, die durch die Anwesenheit eines Werkzeugspannfutters (3) in seinem Halter (4) betätigt wird, wobei die Licht- oder Ultraschallschranke bevorzugt in den Halter (4) eingelassen ist.

11. Verfahren zum Betreiben eines Induktionsschrumpfgeräts (1) zum Ein- und/oder Ausschrumpfen von Werkzeugen (8) in und aus Werkzeugspannfuttern (3) in Gestalt von Schrumpffuttern (3), mittels einer Induktionsspule (6), die über den Haltebereich des Werkzeughalters (4) geschoben wird, der den Schaft des ein- oder auszuspannenden Werkzeugs (8) aufnimmt und hält, und (zumindest) in dem Haltebereich im Rahmen eines Erwärmungs-zyklus Wirbelströme induziert, die ihn soweit und so schnell er-wärmen, dass sich ein Werkzeugschaft in den Haltebereich einbauen oder aus ihm ausbauen lässt, **dadurch gekennzeichnet, dass** vor jedem erneuten Inbetriebsetzen der Induktionsspule geprüft wird, ob ein Sensor eine Veränderung erfasst hat, die darauf hindeutet, dass ein Schrumpffutterausbau und/oder Schrumpffuttereinbau stattgefunden hat.

12. Verfahren nach Anspruch 11, **dadurch gekennzeichnet, dass** das Verfahren mit einem Induktionsschrumpfgerät nach einem der vorstehenden Vorrichtungsansprüche durchgeführt wird.

13. Verwendung von einem oder mehreren Sensorsignalen um festzustellen ob zwischen zwei aufeinanderfolgenden Erwärmungszyklen das Schrumpffutter aus der Induktionsspule ein- und/oder ausgebaut worden ist.
